# EUROPEAN PATENT APPLICATION

(11) **EP 3 067 101 A1**
(43) Date of publication of application: **14.09.2016**
(21) Application number: 15158436.4
(22) Date of filing: 10.03.2015
(51) Int. Cl.: B01D 1/00, B01D 1/06, B01D 1/26

(54) **An evaporator and process for use thereof**

(71) Applicant: Sulzer Chemtech AG, 8404 Winterthur (CH)
(72) Inventor: Gentner, Michel, 68220 Leymen (FR)
(74) Representative: Manitz, Finsterwald & Partner GbR

(57) **Abstract**

A multiple effect evaporator 1 adapted for a counter-current flow of at least one liquid and one vapor therein is disclosed, and it comprises a heating means 10, and within a common vessel 15: a first evaporator chamber 25, a plurality of vertically-oriented heat exchange devices 30, a first distributing unit 60, a first collecting unit 70, and an internal condensing means 90. A pressure regulation device for regulating the pressure between the chamber 25 and a heat exchange device 30 is absent from the evaporator 1. The present invention further relates to a process to separate at least two components by means of counter-current flow of at least one liquid and one vapor using the multiple effect evaporator 1 and also to the use of the evaporator 1 or the process in the purification and/or concentration of a thermally-sensitive compound and/or in the removal of a solvent.

## Description

### BACKGROUND OF THE INVENTION

The present invention relates to a multiple effect evaporator adapted for a counter-current flow of at least one liquid and one vapor therein. The present invention also relates to a process for using said evaporator for the separation of least two components by means of a counter-current flow of at least one liquid and one vapor, and the use of said evaporator in the purification and/or concentration of a thermally-sensitive compound and/or in the removal of a solvent.

An evaporator is a device that transforms a liquid material into a vapor form, and evaporators may be used to separate compounds based on their relative boiling points and volatility. Evaporation processes are of utility, for example, in the work-up after a chemical reaction to isolate, concentrate and/or purify the product(s) in a variety of industrial processes. Evaporation is thus widely used to concentrate foods and chemicals as well as to recover solvents. The purified or concentrated substances may be inorganic in nature such as metallic compounds, organic such as fine chemicals or natural products, or organometallic compounds. The removed substances may be water, solvents and/or reaction byproducts or other impurities.

In a typical evaporation system, a liquid containing the desired product is fed into an evaporator and is heated by a heat source. The applied heat converts a volatile component in the liquid into vapor. The vapor is removed from the rest of the liquid in a separator and then condensed by a condenser. The thus concentrated liquid product may be either fed into a second evaporator unit, recirculated or removed. The evaporator may be operated at reduced pressure of typically about 200 to 1000 Pascal absolute so as to favorably reduce the boiling points of the components, thus allowing temperature-sensitive products to be purified and/or concentrated at lower temperatures.

Evaporation steps with increased energy consumption are often performed in multi-effect evaporation units to reduce the overall energy input. Each effect (sometimes also called stage) reduces the specific steam consumption per kg distillate. Falling film evaporators are typically used for multi-effect evaporation processes, and beneficially they have little liquid holdup and can be operated with only a small temperature difference between the hot side and the cold side. They perform well within a large pressure range extending from atmospheric to vacuum as low as 200 Pascal absolute. Their use is therefore beneficial for thermo-sensitive products.

Evaporation with heat integration normally takes places in at least two vessels, where the liquid is evaporated in the first one and the produced vapor is used to heat the next vessel, as disclosed in "Verdampfung und ihre technischen Anwendungen", by R. Billet, Verlag Chemie, published in Weinheim, 1981, particularly on p. 270. Thus the industry uses for multiple-effect evaporation a series of evaporators (e.g. at least two falling film evaporators). The first evaporator is fed with a liquid stream, which is partly evaporated within the evaporator at a specific pressure P1 with a heating medium on the utility side. The vapor is separated from the concentrated liquid either in the same shell or in an external equipment (vapor/liquid separation section). The concentrated liquid stream exits the separation section with a temperature T1 and can optionally be partly be re-circulated to the previous evaporator. The concentrated liquid is fed to the second evaporator, which is operated under a lower pressure (p2<p1) to reduce the boiling temperature T2. The vapor stream exits the separation section and enters the utility side of the second evaporator and condenses on the outer surface of the evaporation section (utility side) at a temperature T1'. A heat transfer occurs between the outer surfaces and inner surfaces of the heat exchanger section and as a result the concentrated liquid is partly evaporated at a temperature T2. (T2<T1) The condensate is removed from the utility side. These steps can be repeated with further evaporators until the final concentration of the liquid stream is reached or until sufficient distillate is evaporated from the liquid (e.g. for solvent recovery).

The advantage of such a multiple effect evaporator unit is the heat integration. Only the first evaporator is heated with an external heat source (e.g. steam), while the other following evaporators are heated with the vapor stream of the previous evaporator. This combination of several evaporation stages leads to an overall decreased energy consumption for the process.

The disadvantage of such a unit is the need of several pressure vessels, pumps and pipe work. These separate units are contained in pressure vessels with their own individual shells and connected together by piping. The use of longer piping having smaller diameters and with more bends generates more pressure drop and thus limits the vacuum level that may be achieved in the evaporator. Furthermore each connection of piping is a source of possible leakage. For example, a typical vapor line between an evaporator and condenser may cause a pressure drop of about 1 mbar, which is then on the same order of magnitude as the operating pressure of the evaporator itself. Such typical pressure drops may undesirably increase the pressure in the evaporation section by about 10 % up to a factor of about 2. Furthermore the use of such separate units makes the system more costly and complex to design and operate, as well as causing it to have a large room requirement ("footprint"). Such multiple effect evaporators having separate external units such as condensors - and thus these disadvantages - are disclosed, for example, in US 699,038; US 3,907,629; and GB 1,411,676. In seldom cases, the feed is introduced in the vessel with the lowest pressure and it is pumped in the next vessel.

It is noted that evaporators based on counter-current flow of vapors advantageously do not require a liquid-vapor separator and make use of gravitational forces as the denser liquid flows downward while the lighter vapors flow upward.

It is noted that wiped film evaporators or even molecular distillation units may be used for treating thermally-sensitive compounds; however, such evaporators still require the use of several shells and they also rely on moving parts, which requires both increased maintenance and investment costs.

In conclusion, it would be desirable to have an multiple-effect evaporator unit capable of operating with a low energy consumption and that would thus be better suited for purification of thermally-sensitive compounds, especially those having low viscosity (i.e. less than or equal to about 20 millipascal-second), than those of the prior art, and while also offering an integrated system not requiring piping between sub-units and separate pressure vessel shells for each sub-unit thus reducing the cost, complexity and footprint.

A multiple-effect evaporator unit integrated in a single shell system is known from the previously-mentioned US 3,907,629. However from a heat and/or mass transfer point of view, it would be desirable to still further improve such units.

In addition, the disclosed unit of US 3,907, 629 has a complex pressure regulation system comprising several siphon overflow and capillary tubes. Such systems are complex and expensive to build, maintain and clean. Furthermore this complex pressure regulation system requires additional carefully monitoring during operation. The evaporators disclosed in the earlier mentioned US 699,308 and GB 1,411,676 suffer similar disadvantages as they both require pressure regulating valves or devices.

### SUMMARY OF THE INVENTION

Starting from this state of the art, it is an object of the invention to provide an improved multiple-effect evaporator and an improved process to separate at least two components using such an evaporator, particularly in terms of increased heat and/or mass transfer. Further objects of the invention include providing a process for using said evaporator and a use of said evaporator or process in the purification and/or concentration of a preferably thermally-sensitive compound, preferably one of low viscosity, and/or in the removal of a solvent, or in the separation of a compound having a boiling point under atmospheric pressure at a temperature above its thermal decomposition temperature.

Preferably these objectives will be obtained with an evaporator that is simple to build and operate (control), having a small footprint, with a minimum of potential leakage points and being able to achieve a high vacuum.

According to the invention, these objects are achieved by a multiple effect evaporator comprising: a heating means for evaporating a liquid to a vapour, and within a common vessel: a first inlet for feeding a first liquid; a first evaporator chamber disposed in vertical alignment; a plurality of vertically-oriented heat exchange devices, each having an upper opening and a lower opening, in said evaporator chamber; wherein each said heat exchange device being connected to an upper plate at a top end and to a bottom plate at a lower end thereof; a first distributing unit for receiving liquid and placed above said upper plate and for distributing the liquid to the upper openings of the heat exchange devices; a first collecting unit for collecting liquid from the lower openings of the heat exchange devices; a first outlet for a vapour; a second outlet for a second liquid; a third outlet for a condensed liquid which is condensed on an outer surface of the heat exchange devices; a fourth outlet for a collected liquid;
wherein the first inlet and first outlet are in fluid communication with the plurality of vertically-oriented heat exchange devices, the first collecting unit is in fluid communication with the heating means, and wherein the heating means provide at least a partial evaporation of a liquid to a vapour, and wherein the multiple effect evaporator is adapted for a counter-current flow of at least one liquid and one vapor therein,
wherein said evaporator further comprises within the common vessel a condensing means for condensing a vapour to a liquid,
and wherein the evaporator does not have a pressure regulation device within or in fluid communication with the common vessel, wherein the pressure regulation device is embodied for regulating the pressure between the first evaporator chamber and the heat exchange devices.

The provision of a condensing means for condensing a vapour to a liquid evaporator within the common vessel is beneficial in that condensed liquids are easier to handle, store and transport than gases. Providing the condensing means within the common vessel helps minimize the footprint and potential leakage points while helping to enable the achievement of a high vacuum.

The lack of a pressure regulation device within or in fluid communication with the common vessel simplifies the construction, maintenance and operation of the evaporator, thus minimizing both fixed and variable costs. It has been surprisingly found in the present design that the use of a counter-current flow configuration in a multiple effect evaporator contained within a common vessel eliminates the need for such requirements. This lack of need for pressure regulation devices in the evaporator of the invention is due to the fact that such an integrated evaporator does not suffer from the pressure losses associated with the piping required when the evaporator consists of individual shells. The lack of a pressure regulation device within or in fluid communication with the common vessel means that there is a direct fluid and/or vapour connection between the first evaporator chamber and the heat exchange devices.

According to the invention, the further object is achieved firstly by a process to separate at least two components by means of counter-current flow of at least one liquid and one vapor, wherein to a multiple effect evaporator of the invention, a first liquid feed stream comprising the at least two components is fed by means of the first inlet, comprising the steps of: distributing a liquid by means of a first distributing unit as a distributed liquid onto an upper plate, said distributed liquid entering a plurality of vertically-oriented heat exchange devices by means of the upper openings of said heat exchange devices, a heat exchanging step between a fluid on an outer surface of the heat exchange devices and a liquid on an inner surface of said heat exchange devices, a mass transfer step to form a first vapour from a portion of said liquid on an inner surface of said heat exchange devices, the formed first vapour exiting said heat exchange devices by means of the upper openings of said heat exchange devices and passing by said first distributing unit, a portion of said liquid on an inner surface of said heat exchange devices exiting the heat exchange devices by means of the lower openings of said heat exchange devices, collecting the liquid exiting said lower openings by means of a first collecting unit within the first evaporation chamber to form a collected liquid, at least a portion of the collected liquid exiting the common vessel by means of a fourth outlet, at least a portion of the collected liquid entering the heating means to form a second vapour, a portion of the formed second vapour passing by said first collecting unit and condensing on said outer surface of said heat exchange devices in said heat exchanging step, said condensed vapour exiting the common vessel as a condensed liquid by means of a third outlet, at least a portion of a formed first vapour exiting the evaporator by means of a first outlet located in an upper section of the common vessel of the evaporator, at least a portion of said collected liquid present in the evaporator exiting said evaporator as a second liquid by means of a second outlet. The use of this claimed process shares the same advantages as that of the multiple effect evaporator of the invention, namely a low energy consumption but having an increased amount of heat or mass transfer and thus better suited for purification of thermally-sensitive compounds.

Said evaporator and said process is used in accordance with the invention in the purification and/or concentration of a thermally-sensitive compound, preferably one of low viscosity, and/or in the removal of a solvent, or in the separation of a high-boiling compound. As will be discussed, such compounds and processes particularly benefit from the present invention.

The present invention achieves these objects and provides a solution to this problem by means of a multiple effect evaporator adapted for a counter-current flow of at least one liquid and one vapor therein. As a result, several advantages are provided by the invention. First of all, a large heat-exchange capacity is provided together with a small footprint since the evaporator is within one common vessel. Secondly, lower investment costs and lower operating costs are possible with the evaporator of the invention due to its heat integration. Thirdly, the multiple effect evaporator of the invention can have many evaporation stages as it is only mechanically or height-limited. Fourthly one may feed solutions to multiple effect evaporators that precipitate at high concentrations or have a moderate solid content. Low pressures are achievable with the evaporator of the invention due to the elimination of separate pressure vessels with their own individual shells and connected together by piping, so that heat-sensitive materials may be readily treated with it as lower operating temperatures may be used.

In a preferred embodiment of the evaporator or process, the evaporator sub-unit is a falling film evaporator sub-unit comprising one or more heated surfaces, wherein the surfaces are preferably those of tubes, channels, or plates. The use of a falling film evaporator is advantageous because it is a static device and does not need complex rotating parts like wiped film evaporators do. In a more specific preferred embodiment, the one or more heated surfaces are substantially vertical, which improves heat transfer and allows them to be gravity driven and thus eliminates the need for a pump.

According to another preferred embodiment of the evaporator or the process, the counter-current flow is embodied such that a liquid flows downwards and a vapour flows upward within the common vessel. This embodiment has the benefit that the liquid flow is gravity-driven, and thus there is no need for pumps.

In further or more specific preferred embodiments, the heating means is within the common vessel of the multiple effects evaporator. These embodiments have the advantage of enabling a smaller footprint, lower investment costs, and lower pressure drops, as well as a reduced or eliminated need for pumps & piping.

According to a further other preferred embodiment of the evaporator and the process, each of the vertically-oriented heat exchange devices of the evaporator are candle-type heat exchange devices. Such heat exchange devices have the benefit of lower manufacturing costs.

According to yet a further other preferred embodiment of the evaporator and the process, the evaporator further comprises within the common vessel one or more internal sub-units, preferably including at least one of an internal collector or an internal distributor. The provision of such internals improves mass transfer efficiency and enables higher purities to be obtained. In further or more specific preferred embodiments, the evaporator further comprises within the common vessel an internal sub-unit having a surface embodied such that a contact is provided between a vapor and a liquid and a mass transfer is provided between the vapor and the liquid, wherein the internal sub-unit is preferably a packing, more preferably a structured packing, wherein a first circulating means is provided that is embodied such that a second liquid feed stream may be fed to the internal sub-unit by means of a third inlet in fluid communication with a internal distributor.

According to still yet a further preferred embodiment of the evaporator and the process, moving parts are absent within the common vessel, which then beneficially reduces maintenance, operational complexity, energy consumption, as well as their associated costs.

In yet another preferred embodiment of the evaporator and the process, the heating means for evaporating a liquid to a vapour is a reboiler subunit in fluid communication with a lower portion of the common vessel, preferably by means of a second outlet and a second inlet of the evaporator. A reboiler subunit is particularly efficient and effective in providing the initial evaporation of the liquid to vapor. In further or more specific preferred embodiments, the heating means for evaporating a liquid to a vapour is located within a lower portion of the common vessel, which advantageously enables a smaller footprint and less piping.

In yet another preferred embodiment of the evaporator and the process, the multiple effect evaporator additionally comprises a boot, wherein the boot is contained within the common vessel and is located in a lower portion and substantially below the heating means. The provision of a boot is beneficial in that it minimizes liquid hold-up in the evaporator vessel and thus reduces the residence time at elevated temperatures of the materials to be separated.

In still yet another preferred embodiment of the evaporator and the process, the evaporator comprises one or more additional components selected from the group consisting of an additional evaporator chamber, an additional distribution unit, an additional collecting unit, an additional inlet and an additional outlet. An additional evaporator chamber enables more stages to take place within the evaporator, and additional units and inlets and outlets may be required to facilitate the incorporation of additional evaporation chambers. In further or more specific preferred embodiments, a second circulating means comprising a fluid communication between an additional evaporator chamber and a first evaporator chamber is provided for the circulation of a liquid from an additional collecting unit of an additional evaporator chamber to a first distributing unit of a first evaporator chamber, wherein the first evaporator chamber is located above the additional evaporating chamber.

In a preferred embodiment of the process, at least one component of the first liquid feed stream is a thermally-sensitive compound having a thermal degradation temperature falling within the range of from 10 to 300, preferably from 20 to 275, most preferably 30 to 250 °C. Compounds having such sensitivity to thermal degradation can particularly benefit from the low operating temperatures achievable with the evaporator and the process of the invention. The thermal decomposition temperature of a substance is the temperature at which the substance chemically decomposes. The thermal decomposition temperature of a substance may be determined by a variety of conventional thermoanalytical methods well known in the art such as differential scanning calorimetry (DSC) or thermogravimetric analysis (TGA), optionally connected to coupled in-line characterization equipment such as gas chromatography, mass spectrometry or FTIR spectrometers in the case of TGA. For example, ASTM E2550 provides a Standard Test Method for Thermal Stability by Thermogravimetry.

One skilled in the art will understand that the combination of the subject matters of the various claims and embodiments of the invention is possible without limitation in the invention to the extent that such combinations are technically feasible. In this combination, the subject matter of any one claim may be combined with the subject matter of one or more of the other claims. In this combination of subject matters, the subject matter of any one process claim may be combined with the subject matter of one or more other process claims or the subject matter of one or more evaporator claims or the subject matter of a mixture of one or more process claims and evaporator claims. By analogy, the subject matter of any one evaporator claim may be combined with the subject matter of one or more other evaporator claims or the subject matter of one or more process claims or the subject matter of a mixture of one or more process claims and evaporator claims. By way of example, the subject matter of any one claim may be combined with the subject matters of any number of the other claims without limitation to the extent that such combinations are technically feasible.

One skilled in the art will understand that the combination of the subject matters of the various embodiments of the invention is possible without limitation in the invention. For example, the subject matter of one of the above-mentioned preferred evaporator embodiments may be combined with the subject matter of one or more of the other above-mentioned preferred process embodiments or vice versa without limitation.

### BRIEF DESCRIPTION OF THE DRAWINGS

The invention will be explained in more detail hereinafter with reference to various embodiments of the invention as well as to the drawings. The schematic drawings show:
- Fig. 1: shows a schematic view of an embodiment of a multiple effect evaporator according to the invention having a first evaporator chamber, wherein an internal condensing means is provided and a heating means is provided externally.
- Fig. 2: shows a schematic view of a preferred embodiment of a multiple effect evaporator according to the invention having a heating means within the common vessel.
- Fig. 3: shows a schematic view of another preferred embodiment of an evaporator according to the invention having an additional evaporator chamber, and in which a heating means, a boot, and a internal condensing means are provided within the common vessel.
- Fig. 4: shows a schematic view of another preferred embodiment of an evaporator according to the invention having multiple evaporation chambers, and in which candle-type heat exchange devices, an internal condensing means, and a reboiler subunit in fluid communication with a lower portion of the common vessel are provided.
- Fig. 5: shows a schematic view of a preferred embodiment of a multiple effect evaporator according to the invention having a heating means within the common vessel and in which internal sub-units including an internal collector and an internal distributor, as well as a first circulating means, are provided.

### DETAILED DESCRIPTION OF THE INVENTION

### DEFINITIONS

As used in the specification and claims of this application, the following definitions, should be applied:
"a", "an", and "the" as an antecedent may refer to either the singular or plural unless the context indicates otherwise.

The term "vertical" as in "vertical alignment" or "vertically-oriented" refers to a direction passing by a given point that is locally substantially aligned with the direction of the gravitational force at that point. In one embodiment, it is aligned or oriented to within 10, preferably 5 degrees.

The term "fluid" refers to the vapor and/or liquid that is used as a heating medium for a heat exchanging step between the fluid on an outer surface of a heat exchange device and a liquid on an inner surface.

The term "pressure regulation device" refers to a device embodied for the regulation of the pressure between a first evaporator chamber and a heat exchange device. Such pressure regulation devices are known from the prior art, such as the earlier discussed US 699,038; US 3,907,629; and GB 1,411,676. Examples of such pressure regulation devices include a U-shaped liquid column or a valve such as pressure reducing, restricting, or controlling valve. The lack of a pressure regulation device means that there is a direct fluid and/or vapour connection between the first evaporator chamber and the heat exchange devices.

Numerical values in the present application relate to average values. Furthermore, unless indicated to the contrary, the numerical values should be understood to include numerical values which are the same when reduced to the same number of significant figures and numerical values that differ from the stated value by less than the experimental error of the conventional measurement technique of the type described in the present application to determine the value.

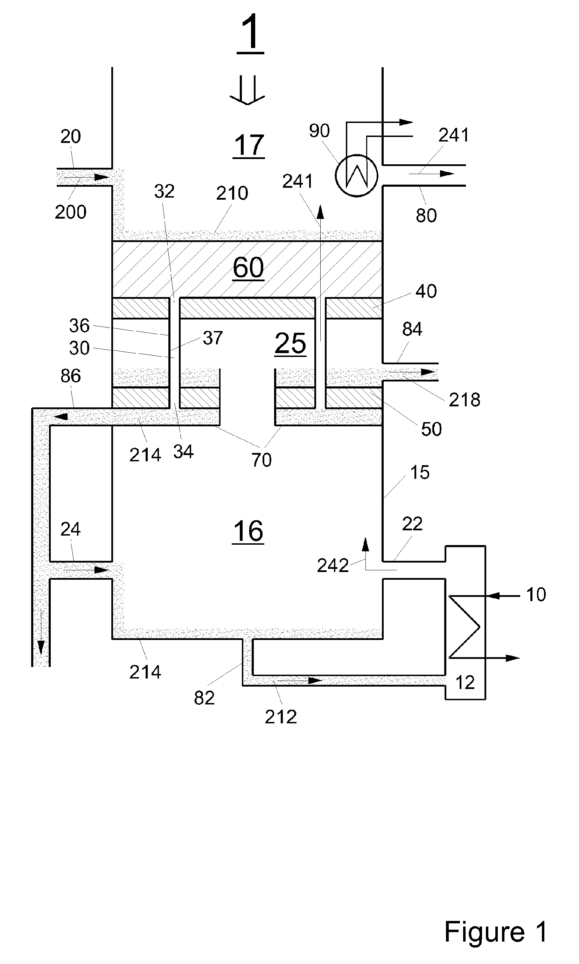

FIG. 1 shows a schematic view of an embodiment of a multiple effect evaporator according to the invention, which as a whole is labeled with reference number 1. The evaporator 1 is not specifically limited as to form, shape, construction or composition unless specifically indicated otherwise. Any suitable material that can be fabricated can be made into an evaporator 1. For reasons of economy, evaporators are often made from stainless steel or another material indicated for the specific application. Evaporator internal components are generally made from metals depending upon the process requirements. In one embodiment the evaporator 1 and its components are constructed of metals. Suitable metals include carbon steel, stainless steel, nickel alloys, copper alloys, titanium and zirconium.

The embodiment in FIG. 1 shows a substantially vertical multiple effect evaporator 1, but it will be understood by one skilled in the art that other orientations of the evaporator 1 are possible, so long as technically feasible.

Evaporators and their construction and operation are well known in the art, for example, as disclosed in Handbook of Evaporation Technology, by P.E. Minton, published in 1986 by Noyes (ISBN 0-8115-1097-7), Fundamentals and modeling of separation processes: absorption, distillation, evaporation and extraction, by C.D. Holland, published in 1975 by Prentice-Hall (ISBN 0-13-344390-6), and Selecting Evaporators For Process Applications, by W.B. Glover, Chemical Engineering Progress, Dec. 2004, p. 26 - 33, www.cepmagazine.org. Unless indicated otherwise, conventional construction materials and means, as well as components and auxiliaries, may be used for the evaporator 1, and the evaporator 1 may be operated in an evaporation process in a conventional manner as known in the art. For example, these cited reference handbooks and textbooks disclose a variety of conventional means for evaporating, heat exchanging and condensing for use in evaporators.

The evaporator 1 is adapted for a counter-current flow of at least one liquid and one vapor therein and may be used in a process to separate at least two components, in which a first liquid feed stream 200 comprising the at least two components is fed by means of the first inlet 20. In this process at least a portion of a formed first vapor 241 exits the evaporator 1 by means of a first outlet 80 located in an upper portion 17 of a common vessel 15 of the evaporator 1, and at least a portion of a collected liquid 214 present in the evaporator 1 exits said evaporator 1 as a second liquid 212 by means of a second outlet 82.

The common vessel 15 is not specifically limited as to form, shape or composition. In the embodiments shown in the figures it is cylindrical in shape.

The first liquid feed stream 200, as well as an optional second liquid feed stream 202 fed to an internal sub-unit 100 and the various liquids 210 in the process, such as a first liquid 211, a collected liquid 214, a distributed liquid 216, a condensed liquid 218, are all not specifically limited and each may comprise one or more organic compounds, solvents, water or mixtures thereof. Likewise the fluid 230, vapor 240, first vapor 241, second vapor 242, and the condensed vapor 244 are all also not specifically limited and each may comprise one or more organic compounds, solvents, water or mixtures thereof. In some embodiments the vapors may comprise a mixture with liquid phase, for example, in the form of droplets.

The multiple effect evaporator 1 comprises a first distributing unit 60 for receiving liquid 210 and placed above an upper plate 40 and for distributing the liquid to upper openings 32 of heat exchange devices 30. In the associated process step the liquid 210 is distributed as a distributed liquid 216 onto the upper plate 40, and the distributed liquid 216 then enters a plurality of vertically-oriented heat exchange devices 30 within the common vessel 15 by means of the upper openings 32 of said heat exchange devices 30.

The vertically-oriented heat exchange devices 30 are conventional and may be of the tube, candle, channel or plate types, all of which have large surface areas and favorable flow properties. Each heat exchange device 30 is connected to an upper plate 40 at a top end and to a bottom plate 50 at a lower end. The heat exchange devices 30 are embodied to be suitable for a heat exchanging step between a fluid 230 on an outer surface 36 of the heat exchange devices 30 and a liquid 210 on an inner surface 37 of said heat exchange devices 30. In the process of the invention, a distributed liquid 216 enters a plurality of vertically-oriented heat exchange devices 30 by means of the upper openings 32 of said heat exchange devices 30. A mass transfer step to form a first vapour 241 from a portion of said liquid 210 takes place on an inner surface 37 of said heat exchange devices 30, and the formed first vapour 241 exits said heat exchange devices 30 by means of the upper openings 32 of said heat exchange devices 30 and passing by the first distribution unit 60. In a specific embodiment, the vertically-oriented heat exchange devices 30 are candle-type heat exchange devices 38.

A third outlet 84 is provided for a condensed liquid 218 which is condensed on an outer surface 36 of the heat exchange devices 30. The multiple effect evaporator 1 comprises a first collecting unit 70 within the first evaporation chamber 25 and for collecting liquid 210 exiting from the lower openings 34 of the heat exchange devices 30 to form a collected liquid 214. At least one portion of the collected liquid 214 exits the common vessel 15 by means of a fourth outlet 86, and another portion of the collected liquid 214 enters a heating means 10 to form a second vapour 242.

The heating means 10 is suitable for evaporating a liquid 210 to a vapour 240, particularly a portion of a collected liquid 214 to form a second vapour 242. Suitable heating means 10 include an internal evaporation unit, an external reboiler subunit 12, a distillation column, an evaporator, or a conventional heat exchanger such as of the tubular, plate, extended surface, regenerative, shell and tube types, and the flow arrangement may be single pass, such as counter, parallel, cross, split or divided flow types. The heating means 10 may be located within the common vessel 15.

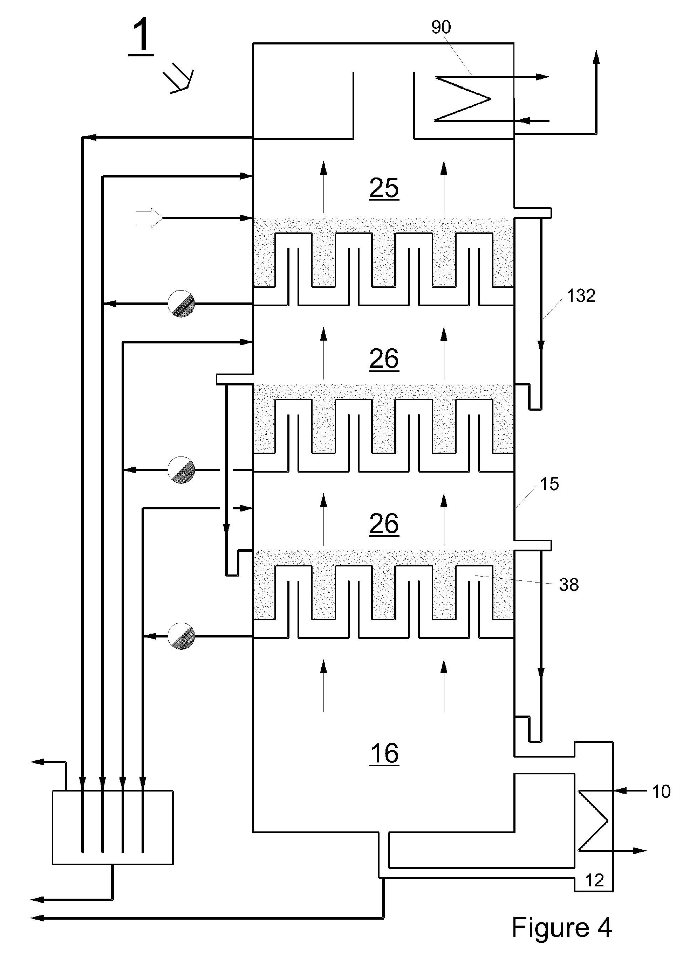

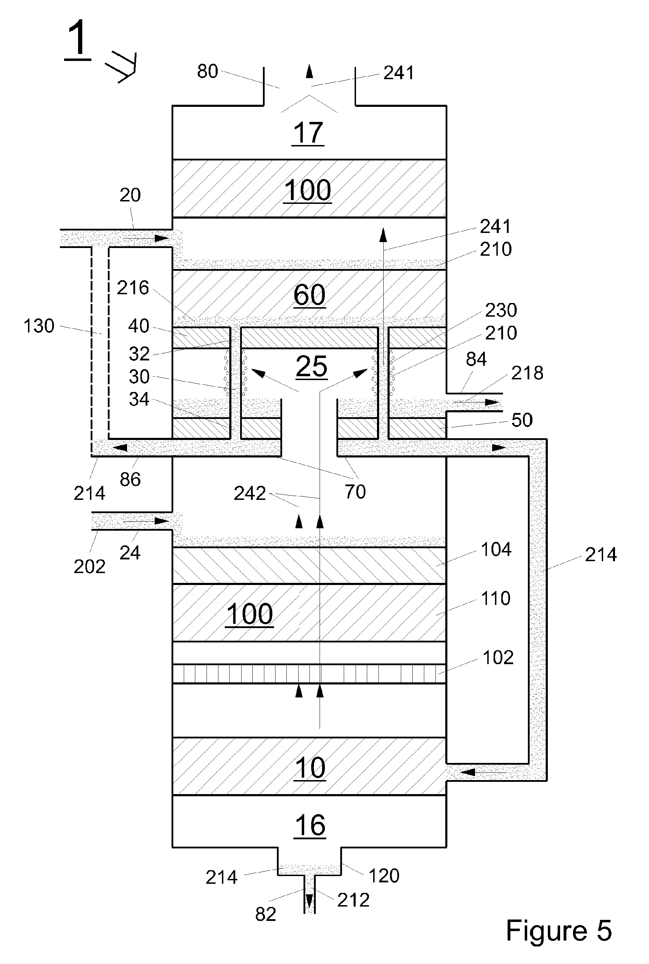

In some embodiments, as exemplified in FIG. 4, the heating means 10 for evaporating a liquid to a vapour is a reboiler subunit 12 in fluid communication with a lower portion 16 of the common vessel 15, preferably by means of a second outlet 82 and a second inlet 22 of the evaporator 1. In other embodiments of the multiple effect evaporator 1, as exemplified in FIG. 5, the heating means 10 for evaporating a liquid to a vapour is located within a lower portion 16 of the common vessel 15.

A portion of the formed second vapour 242 passes by said first collecting unit 70 and condenses on the outer surface 36 of the heat exchange devices 30 in the earlier described heat exchanging step. The condensed vapour 244 exits the common vessel 15 as a condensed liquid 218 by means of the third outlet 84.

At least a portion of the formed first vapour 241 exits the evaporator 1 by means of the first outlet 80 located in the upper portion 17 of the common vessel 15 of the evaporator, and at least a portion of the collected liquid 214 present in the evaporator 1 exits the evaporator 1 as a second liquid 212 by means of a second outlet 82.

The multiple effect evaporator 1 further comprises a internal condensing means 90 for condensing a vapor to a liquid. The internal condensing means 90 is located within the common vessel 15. The internal condensing means 90 is conventional as known in the art and not specifically limited. For example, it may be a surface condenser such as a shell and tube heat exchanger, or a Liebig, West, Allihn, Davies, Graham, coil, Dimroth, spiral, or Friedrichs condenser. The coolant may be air, water, or other gaseous, liquid or solid coolant.

In some embodiments, the multiple effect evaporator 1 further comprises within the common vessel 15 one or more internal sub-units 100, preferably including at least one of an internal collector 102 or an internal distributor 104. The internal collector 102 and internal distributor 104 are conventional in the art for the collection or distribution of liquids in separation devices such as columns or evaporators. Collector types include chimney tray, Chevron-type, trough liquid, and deck liquid collectors. Collectors are typically used for total draw-off of a liquid to product or pump-around pump down loops, partial draw-off of a liquid with overflow continuing down the evaporator 1, or the collection of liquid for mixing. Typically Chevron-type and trough liquid collector plates require less height than deck-style collectors, and thus they are preferred where height is limited.

One skilled in the art will understand that that the performance of an multiple effect evaporator 1 and its first and any further evaporator chambers, 25 and 26, can be significantly affected by how uniformly the feed and solvent inlet streams are distributed to their cross section. The requirements for distribution and redistribution vary depending upon the type of internals (packing, trays, agitators, or baffles) and the impact of the internals on the flow of dispersed and continuous phases within the multiple effect evaporator 1. Important aspects of the internal distributor 104 include the number of holes and the hole pattern (geometric layout), hole size, number of downcomers or upcomers (if used) and their placement, the maximum to minimum flow rates the design can handle (turndown ratio), and resistance to fouling. Liquid distributors are typically used to achieve uniform liquid distribution across the evaporator cross section, and distributors 104 will often be located above the evaporator 1 and/or first and any further evaporator chambers, 25 and 26. Useful distributor 104 types include splash plate, channel types with bottom holes or lateral tubes, pipe orifice, chimney tray, ladder type, pan, deck, trough, pipe arm, trickling or spraying device, spray condenser, sprinkler, spray, and weir overflow distributors.

In certain specific embodiments, as in FIG. 5, the internal sub-unit 100 has a surface 110 embodied such that a contact is provided between a vapor and a liquid and a mass transfer is provided between the vapor and the liquid, wherein the internal sub-unit 100 is preferably a packing, more preferably a structured packing, and wherein a first circulating means 130 is provided that is embodied such that a second liquid feed stream 202 may be fed to the internal sub-unit 100 by means of a third inlet 24 in fluid communication with a internal distributor 102. In one preferred embodiment structured packing is used due to its superior performance. In certain embodiments the packing comprises mass transfer elements known in the art as random packings, such as Raschig and/or Pall rings, saddles, such as e.g. Berl saddles, spheres, hooks, or by the tradenames NOR-PAC™, BIO-NET™, or Hel-X™. In certain other embodiments, the packing comprises structured packings such as those known by the trademarks Mellapak™, Montz-Pak™, Ralu-Pak™, SMV™, or Raschig Super-Pak™. In another preferred embodiment, a combination of trays and structured packing is made, preferably one in which a dual flow tray is located in between each packing element.

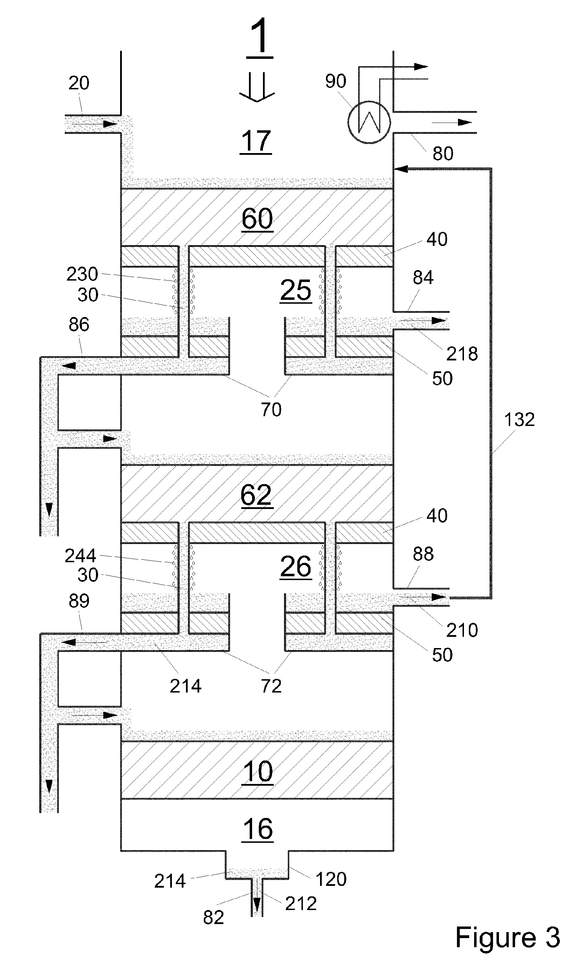

As exemplified by the specific embodiments in FIG. 3 and 5, the evaporator 1 may also additionally comprise a boot 120 contained within the lower portion 16 of the common vessel 15 and located substantially below the heating means 10. The boot 120 is not specifically limited as to form, shape, construction or composition unless specifically indicated otherwise. In order to minimize liquid hold-up, the boot 120 will generally have a diameter that is smaller than the diameter of the lower portion 16 of the common vessel 15. In order to minimize the use of piping and thus residence time and degradation, it will be preferred that the boot 120 is contained within the common vessel 12. For the case of liquids having suspended solids, it will be preferred to locate the second outlet 82 on the side rather than the bottom of the boot 120 so as to allow the solids to settle to the bottom of the boot 120 and be removed.

In some embodiments, as exemplified in FIG. 3, the multiple effect evaporator 1 comprises one or more additional components selected from the group consisting of an additional evaporator chamber 26, an additional distribution unit 62, an additional collecting unit 72, and an additional inlet 22 and an additional outlet 84.

In some embodiments, as exemplified in FIG. 3, a second circulating means 132 comprises a fluid communication between an additional evaporator chamber 26 and said first evaporator chamber 25 is provided for the circulation of a liquid 210 from an additional collecting unit 72 of said additional evaporator chamber 26 to a first distributing unit 60 of said first evaporator chamber 25, wherein the first evaporator chamber 25 is located above the additional evaporating chamber 26.

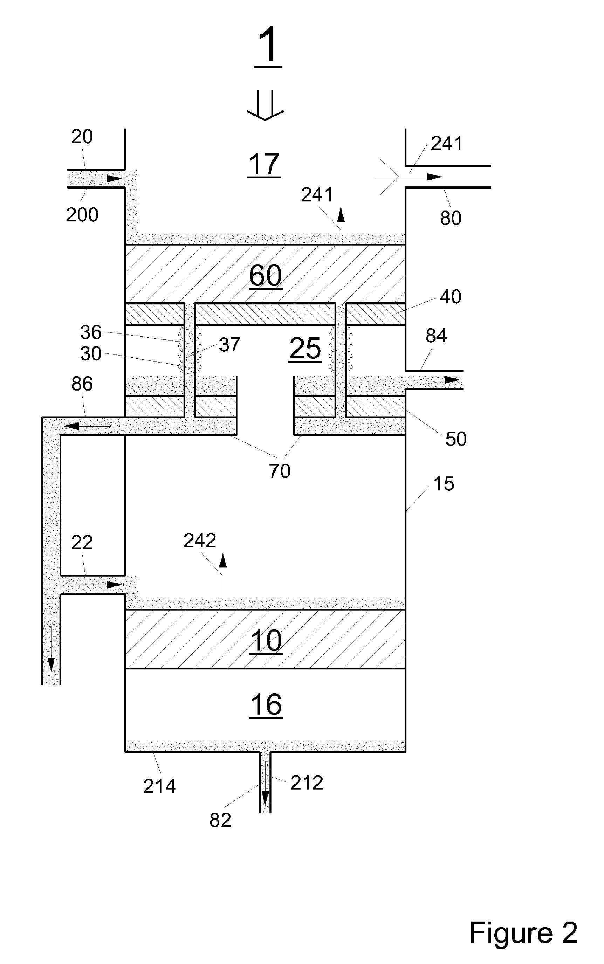

In order to minimize pressure losses in the evaporator 1 in many preferred embodiments, a means other than piping is used for leading the liquid and the vapor between any of evaporator chambers, 25 and 26; units 60, 62, 70, and 72; means 10 and 90, and sub-units, 12 and 100. As can be seen from the embodiments in Fig. 1 - 5, the use of piping may be avoided by locating the various chambers, units, means and sub-units near each other within one common vessel 15 such that they are all in fluid and/or vapor communication with one another.

In order to minimize investment and maintenance costs, moving parts are absent within the common vessel 15 in several preferred embodiments of the evaporator 1.

Although not shown in the schematic figures for simplicity, one skilled in the art will understand that other conventional evaporator and separation device internals may be used without limitation in the invention, such as feed devices like feed pipes and/or sumps, bed limiters, support plates and grids, dispersers, disperser/support plates, continuous phase distributors, packing support and hold-down plates, entrainment separators, and retainers/redistributors. Suitable internals are disclosed for example in the technical brochure "Internals for Packed Columns" from Sulzer Chemtech as publication 22.51.06.40 - XII.09 - 50.

Auxiliaries for the evaporator 1 are conventional and well-known in the art and include electrical supplies, coolant and heating fluid supplies and distributions, level controllers, pumps, valves, pipes and lines, reservoirs, drums, tanks, and sensors for measuring such parameters as flow, temperatures and levels. The evaporator 1 and the separation process will be conveniently controlled by means of a computer interface equipped with appropriate sensors.

Evaporation processes are well known in the art, for example, as disclosed in the earlier cited text- and reference books. Unless indicated otherwise, conventional evaporation processes and their various liquid feed streams, 200 and 202, and operating parameters and conditions may be used in the evaporation processes according to the invention and making use of the evaporator 1.

This separation process of the invention has the benefit of making possible a reduction in the operating temperature of the process. This is both more economical and makes the process milder, thereby minimizing problems of thermal degradation and decomposition of thermally-sensitive fine compounds. In preferred embodiments, one of the components of the first liquid feed streams 200 is a thermally-sensitive compound having a thermal degradation temperature falling within the range of from 10 to 300, preferably from 20 to 275, most preferably 30 to 250 °C. The evaporation process of the invention is particularly well suited for the removal of solvents from such thermally-sensitive compounds. In some preferred embodiments, the first liquid feed stream 200 and the first vapor 241 comprise a solvent. For example, the evaporator 1 and process of the invention may be used for the separation of organic solvents from water, such as to separate acetone (e.g. by means of the first outlet 80 in the upper portion 17) from water (e.g. by means of the second outlet 82 in the lower portion 16). As discussed earlier, the evaporator 1 and process of the invention bring significant benefits when separating such compounds.

In many preferred embodiments of the process, a relatively low operating temperature is achieved by means of a suitably low pressure within the evaporator 1, in some preferred embodiments the pressure is less than 10, preferably 5, more preferably 2, most preferably 1 mbar.

### EXAMPLES

The following examples are set forth to provide those of ordinary skill in the art with a detailed description of how the evaporator 1 adapted for a counter-current flow of at least one liquid and one vapor therein, processes, and uses claimed herein are evaluated, and they are not intended to limit the scope of what the inventors regard as their invention.

In these examples, the evaporator 1 similar to the one shown in Fig. 1 and process of the invention were successfully used in a first typical application for the separation of fatty acids, in this case, the separation of the two omega-3 fatty acids, EPA and DHA. In a second example typical of the separation of an organic solvent from water, the separation of acetone and water was successfully carried out using a pressure of 500 mbar in the upper portion 17, and a pressure of 1075 mbar and a temperature of 101 °C in the lower portion 16. The temperature of the condensed vapor 244 (acetone) was determined to be 58 °C.

While various embodiments have been set forth for the purpose of illustration, the foregoing descriptions should not be deemed to be a limitation on the scope herein. Accordingly, various modifications, adaptations, and alternatives can occur to one skilled in the art without departing from the spirit and scope herein.

### Reference Symbols

- 1: multiple effect evaporator
- 10: heating means
- 12: reboiler subunit
- 15: common vessel
- 16: lower portion of the common vessel
- 17: upper portion of the common vessel
- 20: first inlet
- 22: second inlet
- 24: third inlet
- 25: first evaporator chamber
- 26: additional evaporator chamber
- 30: vertically-oriented heat exchange devices
- 32: upper opening of heat exchange device
- 34: lower opening of heat exchange device
- 36: outer surface of heat exchange device
- 37: inner surface of heat exchange device
- 38: candle-type heat exchange devices
- 40: upper plate
- 50: bottom plate
- 60: first distributing unit
- 62: additional distributing unit
- 70: first collecting unit
- 72: additional collecting unit
- 80: first outlet
- 82: second outlet
- 84: third outlet
- 86: fourth outlet
- 88,89: additional outlet
- 90: internal condensing means
- 100: internal sub-unit
- 102: internal collector
- 104: internal distributor
- 110: surface of internal sub-unit
- 120: boot
- 130: first circulating means
- 132: second circulating means
- 200: first liquid feed stream
- 202: second liquid feed stream
- 210: liquid
- 211: first liquid
- 212: second liquid
- 214: collected liquid
- 216: distributed liquid
- 218: condensed liquid
- 230: fluid
- 240: vapor
- 241: first vapor
- 242: second vapor
- 244: condensed vapor

## Claims

1. A multiple effect evaporator (1) comprising:
- a heating means (10) for evaporating a liquid (210) to a vapour (240),
and within a common vessel (15):
- a first inlet (20) for feeding a first liquid (211),
- a first evaporator chamber (25) disposed in vertical alignment;
- a plurality of vertically-oriented heat exchange devices (30), each having an upper opening (32) and a lower opening (34), in said first evaporator chamber (25);
wherein each said heat exchange device (30) being connected to an upper plate (40) at a top end and to a bottom plate (50) at a lower end thereof;
- a first distributing unit (60) for receiving liquid (210) and placed above said upper plate (40) and for distributing the liquid to the upper openings (32) of the heat exchange devices (30);
- a first collecting unit (70) for collecting liquid (210) from the lower openings (34) of the heat exchange devices (30),
- a first outlet (80) for a vapour (240),
- a second outlet (82) for a second liquid (212),
- a third outlet (84) for a condensed liquid (218) which is condensed on an outer surface (36) of the heat exchange devices (30),
- a fourth outlet (86) for a collected liquid (214),
wherein the first inlet (20) and the first outlet (80) are in fluid communication with the plurality of vertically-oriented heat exchange devices (30), the first collecting unit (70) is in fluid communication with the heating means (10), and wherein the heating means (10) provide at least a partial evaporation of a liquid (210) to a vapour,
wherein the multiple effect evaporator (1) is adapted for a counter-current flow of at least one liquid and one vapor therein,
and wherein said evaporator (1) further comprises within the common vessel (15) an internal condensing means (90) for condensing a vapour to a liquid,
wherein the evaporator (1) does not have a pressure regulation device within or in fluid communication with the common vessel (15), and wherein the pressure regulation device is embodied for regulating the pressure between the first evaporator chamber (25) and the heat exchange devices (30).

2. The multiple effect evaporator (1) of claim 1, wherein the counter-current flow is embodied such that a liquid flows downwards and a vapour flows upward within the common vessel (15).

3. The multiple effect evaporator (1) of either claim 1 or 2, wherein the heating means (10) is within the common vessel (15).

4. The multiple effect evaporator (1) of any one of claims 1 to 3, wherein the heating means (10) for evaporating a liquid to a vapour is located within a lower portion (16) of the common vessel (15).

5. The multiple effect evaporator (1) of claim 4, wherein the multiple effect evaporator (1) additionally comprises a boot (120), wherein the boot (120) is contained within the common vessel (15) and is located in a lower portion (16) and substantially below the heating means (10).

6. The multiple effect evaporator (1) of either one of claims 1 or 2,
wherein the heating means (10) for evaporating a liquid to a vapour is a reboiler subunit (12) in fluid communication with a lower portion (16) of the common vessel (15), preferably by means of a second outlet (82) and a second inlet (22) of the evaporator (1).

7. The multiple effect evaporator (1) of any one of claims 1 to 6, wherein each of the vertically-oriented heat exchange devices (30) are candle-type heat exchange devices (38).

8. The multiple effect evaporator (1) of any one of claims 1 to 7, wherein the evaporator (1) further comprises within the common vessel (15) one or more internal sub-units (100), preferably including at least one of an internal collector (102) or an internal distributor (104).

9. The multiple effect evaporator (1) of any one of claims 1 to 8, wherein the evaporator (1) further comprises within the common vessel (15) an internal sub-unit (100) having a surface (110) embodied such that a contact is provided between a vapor and a liquid and a mass transfer is provided between the vapor and the liquid, wherein the internal sub-unit (100) is preferably a packing, more preferably a structured packing, and wherein a first circulating means (130) is provided that is embodied such that a second liquid feed stream (202) may be fed to the internal sub-unit (100) by means of a third inlet (24) in fluid communication with a internal distributor (102).

10. The multiple effect evaporator (1) of any one of claims 1 to 9, wherein the evaporator (1) comprises one or more additional components selected from the group consisting of an additional evaporator chamber (26), an additional distribution unit (62), an additional collecting unit (72), and an additional outlet (88,89).

11. The multiple effect evaporator (1) of any one of claims 1 to 10, wherein a second circulating means (132) comprising a fluid communication between an additional evaporator chamber (26) and said first evaporator chamber (25) is provided for the circulation of a liquid (210) from an additional collecting unit (72) of said additional evaporator chamber (26) to a first distributing unit (60) of said first evaporator chamber (25), wherein the first evaporator chamber (25) is located above the additional evaporating chamber (26).

12. A process to separate at least two components by means of counter-current flow of at least one liquid and one vapor, wherein to a multiple effect evaporator (1) of any one of claims 1 to 11, a first liquid feed stream (200) comprising the at least two components is fed by means of the first inlet (20),
comprising the steps of:
- distributing a liquid (210) by means of a first distributing unit (60) as a distributed liquid (216) onto an upper plate (40),
- said distributed liquid (216) entering a plurality of vertically-oriented heat exchange devices (30) by means of the upper openings (32) of said heat exchange devices (30),
- a heat exchanging step between a fluid (230) on an outer surface (36) of the heat exchange devices (30) and a liquid (210) on an inner surface (37) of said heat exchange devices (30),
- a mass transfer step to form a first vapour (241) from a portion of said liquid (210) on an inner surface (37) of said heat exchange devices (30),
- the formed first vapour (241) exiting said heat exchange devices (30) by means of the upper openings (32) of said heat exchange devices (30) and passing by said first distributing unit (60),
- a portion of said liquid (210) on an inner surface (37) of said heat exchange devices (30) exiting the heat exchange devices (30) by means of the lower openings (34) of said heat exchange devices (30),
- collecting the liquid (210) exiting said lower openings (34) by means of a first collecting unit (70) within the first evaporation chamber (25) to form a collected liquid (214),
- at least a portion of the collected liquid (214) exiting the common vessel (15) by means of a fourth outlet (86),
- at least a portion of the collected liquid (214) entering the heating means (10) to form a second vapour (242),
- a portion of the formed second vapour (242) passing by said first collecting unit (70) and condensing on said outer surface (36) of said heat exchange devices (30) in said heat exchanging step to form a condensed vapour (244),
- said condensed vapour (244) exiting the common vessel (15) as a condensed liquid (218) by means of a third outlet (84),
- at least a portion of the formed first vapour (241) exiting the evaporator (1) by means of a first outlet (80) located in an upper portion (17) of the common vessel (15) of the evaporator (1),
- at least a portion of said collected liquid (214) present in the evaporator (1) exiting said evaporator (1) as a second liquid (212) by means of a second outlet (82).

13. The process of claim 12, wherein at least one component is a thermally-sensitive compound having a thermal degradation temperature falling within the range of from 10 to 300, preferably from 20 to 275, most preferably 30 to 250 °C.

14. The process of either claim 12 or 13, wherein a portion of either the collected liquid (214) and/or the condensed liquid (218), preferably the condensed liquid (218), is removed from the evaporator (1) by means of the third outlet (84) and subsequently returned to the evaporator (1) as a second liquid feed stream (202) to an internal sub-unit (100) by means of a third inlet (24) and an internal distributor (104).
